(19) Europäisches Patentamt

European Patent Office

Office européen des brevets

(11) EP 0 736 563 A1

(12) EUROPEAN PATENT APPLICATION

(43) Date of publication:
09.10.1996 Bulletin 1996/41

(51) Int. Cl.$^6$: C08J 5/18, B29C 47/88

(21) Application number: 95105261.2

(22) Date of filing: 07.04.1995

(84) Designated Contracting States:
BE DE ES FR GB NL SE

(71) Applicant: SAFTA S.p.A.
I-20122 Milano (IT)

(72) Inventors:
- De Micheli, Claudio
I-29100 Piacenza (IT)

- Navarini, Franco
I-29100 Piacenza (IT)
- Roncoroni, Vittorio
I-20145 Milano (IT)

(74) Representative: Incollingo, Italo
Piazzale Lavater, 3
20129 Milano (IT)

(54) **Process for the manufacture of totally bio-decomposable films with high mechanical characteristics and relevant products and applications**

(57) The process for the industrial production of totally bio-decomposable films and sheets comprises: - the preparation of a film-grade mixture of: co-polymer of poly-beta-hydroxy-butyrate with 4-16% of poly-beta-hydroxy valerate (PHBV); 0-20% of plasticizer (f.i. glycerine, citric acid esters etc.); 0,3 -1,5% of a nucleant agent (f.i. barium nitride) and; 0-10% of a synthetic polymer; - the extrusion with temperatures of 110°C-150°C of input and of 140°C-180°C of output; the cooling at 50°-80°C; - the stretching up to a thickness of 15 micron. The mono-or bi-oriented films stretched under particular conditions may show ultimate elongation of 50-350% in the longitudinal direction and of 20-250% in the transversal direction, and ultimate tensile strength of 15-70 N/mm$^2$.

Printed by Rank Xerox (UK) Business Services
2.13.8/3.4

## Description

The present invention concerns a process for the production of totally biodecomposable films comprising: - the preparation of a film grade blend based on poly-beta-hydroxy-butyrate (PH-B) and poly-beta-hydroxy valerate PH-V; - the extrusion of this mixture; - the cooling of the extruded sheet; - the possible stretching in at least one direction and/or the orientation, and the possible stabilization of the oriented film.

The invention concerns the relevant products especially the mono-or bi-oriented films totally biodecomposable and with high mechanical characteristics.

The wide and increasing use of synthetic films of co-polymers of f.i. olefin, vinyl- chloride, amide, therephatlic esters etc. is known especially for the packing, handling, transportation of consume articles.

These materials show undoubtly excelent properties of mechanical resistance, thermo-moldability, barriers to gas, steam, flavours, etc. however they create big problems to the environment because they are practically bio-undencomposable. Accordingly materials have been studied and proposed as having acceptable bio-degradation, f.i. materials obtained by adding decomposition promoters (mainly , rice amid) to the above basic synthetic polymers, but without success.

The search has then been oriented towards polymers obtained by fermentation, instead of catalytic synthetis, and totally bio-decomposable copolymers of poly-beta-hydroxy - butyrate (PHB) and poly-hydroxy-valerate (PHV) have successfully produced by I.C.I. and are commercialised by Zeneca under the trade-mark "BIOPOL$^{®}$".

These polymers offer a radical solution to the bio-decomposability problems however create heavy difficulties in their transformation in extruded and stretched products having the high mechanical characteristics requested by the packaging industry and comparable with those of the available synthetic polymer films.

To the point that in one old attempt recourse had to be made to a sandwich of two (unrecoverable) synthetyc films between which was extruded a "Biopol" film showing, neverthless, poor properties.

First object of the present invention is now a process for the industrial production of biodecomposable films and sheets of "Biopol" without the need of particular additional means and operations. An other object is to provvide sheets and films having total bio-decomposability and high mechanical characteristics. The main features of the invention are recited in the claims.

The various aspects and advantages of the invention will now be explainned in more detail in the following description on the basis of the examples and with reference to the accompanying drawings, in which;

- Fig. 1, is a schematic front view of a hot-blown system;
- Fig.2, is a cross-section of a new cooling ring;
- Fig. 3 and 4, are side, respectively front views of a cast system;
- Fig. 5, is a scheme of an out-line monoaxial stretching system of a cast or blown film;
- Figures 6 and 7, are schemes of a hot-blown film stretched in horizontal (fig.6) respectively vertical (fig.7) line;
- Fig.8, is a scheme of a cast film in- line stretched , and
- Fig. 9, is the scheme of the in-line biaxial stretching of a double-bubble film.

In the drawings the references indicate: PE the polymer pellets charged in the hopper TR feeding the extruder EX with screw S and die F forming, through the special cooling ring AR, the bubble BLO, drawn by the drawing nip NP.T to the stretching device formed of nips NPo and NP1 and including the contact heating plate PIA. Chr is the chill roll and 20-21 indicate possible idle transmission rolls.

### Exemple 2-3. Unstretched hot-blown or cast sheets.

The operative data of each example are indicate in the columns EX1, EX2, EX3 of Table A. In each example a powdery poly-beta-hydroxy-butyrate, poly-beta-hidroxy- valerate (PHB.V1, PHB.V2, PHB.V3) characterized by: a valerate content HV%, average molecular weght (MW), melt flow index (MFI) and melting point DSC, was blended with a crystallization promoter in particular a nucleant (preferably, barium nitride) and a plasticizer (preferably, glycerine, citric acid esters etc.).

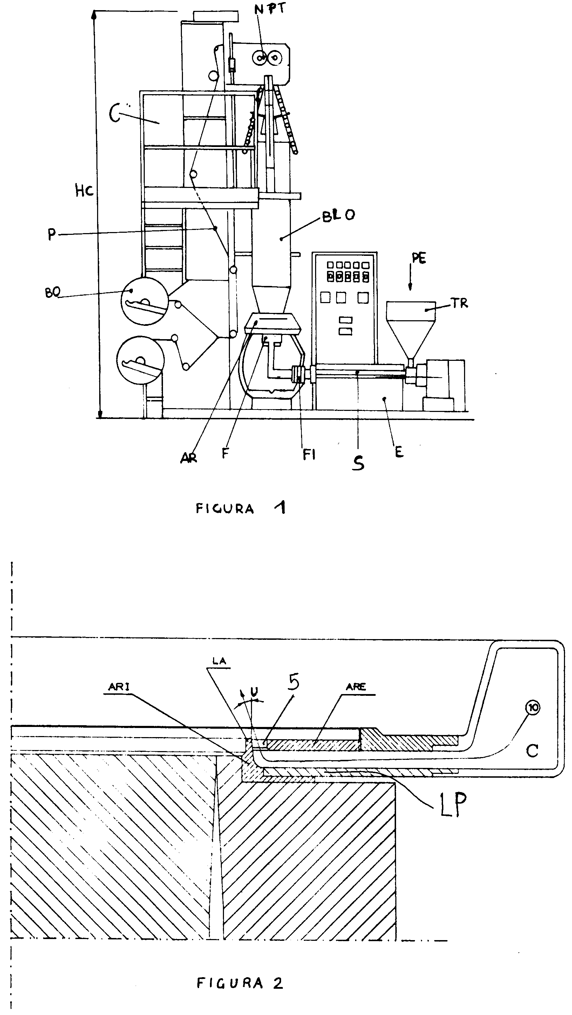

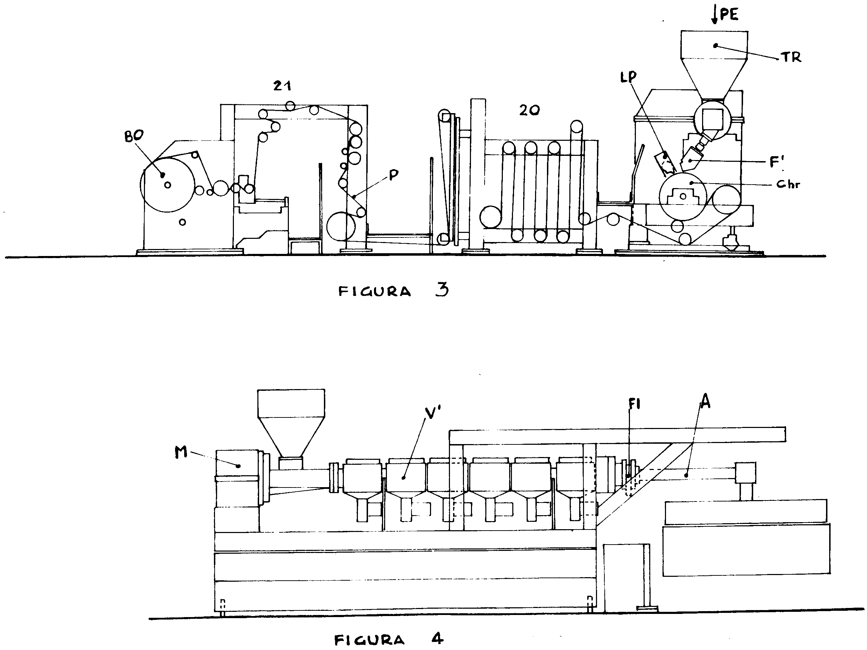

Each mixture was firstly extruded (in conventional, not represented devices) to form pellets (PE) which had a diameter of 2,5 mm and a length of 6 mm and were loaded in the hopper TR. Said pellets were then fed to the extruder EX of the hot-blown plant of figures 1 and 2 (examples 1 and 2) or cast plant of figures 3 and 4 (example 3).

The extruder is, each time, characterized by: screw diameter (V,V'), screw diameter/length ratio L/D, and diameter of the die (D), besides the castle heigth (HC) and the bubble heigth (BH) in examples 1 and 2. The bubble of (PHBV) was formed with the aid of an initial bubble of: EVA resin (polyethylenvinylacetate: with 5% vinylacetate, and melt index of 2,2) in example 1; and of low density polyethylene (LDPE) with a melt index of 4 in example 2. The temperature profile of each device and the film characteristics wound, without stretching, on the reel BO are indicated in Table A. Typically in the examples 1 and 2 the die was provided with special cooling rings AR shown in more detail and on enlarged scale in fig.2 which is a cross-section with a plane parallel to the plane of the drawing of fig. 1. Also in the cast plant of figures 3 and 4 (example 3) the temperature and the speed of the cooling cylinder (Chr) are critical. In particular, for a speed of 5,5 m/min. the temperature has been maintained constant at 65°C to allow the film crystallization and avoid the film sticking to the cylinder.

### TABLE A

| | | Example 1 | Example 2 | Example 3 |
|---|---|---|---|---|
| PHB-V | Content HV | 9.2% | 15.0% | 8.0% |
| MW | Molecular weight | 520000 | 435000 | 300000 |
| MFI | Melt flow index | 9.88g/10min | 10.0g/10min | 6.7g/10min |
| DSC | Melting point | 152°C | 149°C | 154°C |

| | Example 1 | Example 2 | Example 3 |
|---|---|---|---|
| Blend: by w on the PHBV w | 90.5% | 99.1% | -- |
| NU (Nucleant = barium nitride) | 0.9% | 0.9% | -- |
| PLA plasticizer (glycerine triacetate or citric acid esters) | 8.6% | -- | -- |

Extruder:

| | | Example 1 | Example 2 | Example 3 |
|---|---|---|---|---|
| Screw (V) diameter | | 40mm | 40mm | |
| Screw (V')diameter | | -- | -- | 160mm |
| Screw ratio lenght/diameter | | 1:25 | 1:25 | 1:33 |
| Die (D) diameter | | 150mm | 150mm | -- |
| Die (F') opening | | -- | -- | 2200mm |
| Castle height HC | adjustable within | 4-6m | 4-6m | -- |
| Bubble height BH | adjustable within | 3-5m | -- | -- |

Temperature profile:

| | | Example 1 | Example 2 | Example 3 |
|---|---|---|---|---|
| Screw (V) ...... | feed zone | 140°C | 135°C | 140°C |
| ...... | compression zone | 160°C | 155°C | 155°C |
| ...... | advancement zone | 160°C | 157°C | 160°C |
| Filter (FI) | | 160°C | 160°C | 155°C |
| Adapter (A) | | 160°C | 160°C | -- |
| Die head (F) | | 155°C | 155°C | 150°C |
| Screw (V) speed | | 60 rpm | 50 rpm | 10rpm |
| Film advancement speed | | 6m/min | 4.6m/min | 5.5m/min |
| Molten polymer pressure | | 160 bar | 165 bar | -- |

| | | Example 1 | Example 2 | Example 3 |
|---|---|---|---|---|
| Mean thickness | | 85µm | 48µm | 150µm |
| ultimate tensile strength or Break load | longitudinal | 25 N/mm² | 30 N/mm² | 20 N/mm² |
| | transversal | 24 N/mm² | 28 N/mm² | 22 N/mm² |
| Elongation at break | longitudinal | 4.0% | 5.0% | 4.5% |
| | transversal | 3.5% | 3.0% | 4.0% |
| Elastic modulus | longitudinal | 980 N/15mm² | 1600 N/15mm² | 1050 N/15mm² |
| | transversal | 1000 N/15mm² | 1800 N/15mm² | 1100 N/15mm² |

| | Example 1 | Example 2 | Example 3 |
|---|---|---|---|
| $O_2$TR (oxygen barrier) | 250 cc/(m²·24h) | 250cc(m²·24h.bar) | 140cc/(M²24h.bar) |
| W.V.T.R. (steam barrier) | 50g/(m²·24h) | 70g/(m²·24h) | 60g/(m²·24h) |
| Tear propagation resistance | 30g | 40g | -- |
| Weld resistance | 18 N/15mm | 16 N/15mm | -- |
| Surface wettability | -- | 38 dine/cm | -- |

**NOTES:** While in example 1 the film P was wound in tubular form, in example 2 the produced tubular sheet was cut in two separated films which were printed (rotogravure) in three colors. The printing results and the ink adhesion were excellent. The films showed a good wettability (lower than 38 dine (cm) and could be laminated with a polyurethane adhesive giving a coupled film of 300μ. The cast plant shown in figures 3 (front view) and 4 (lateral view) comprised conventionally the adapter A, the filter FI, a polysh blade LP, cooling and advancing zones with rolls 20, 21, the winding reel BO for the flat cast film, the film screw motor M. Critically the temperature and the speed of the chill roll(Chr) are of 65°C and of 5.5m/min.

Critical <u>aspects and conditions in the Hot-blown process</u>. It has been found that to form and maintain the bubble BLO in fig. 1 it was necessary that the cooling air from complex ring AR had an impact on the molten polymer at the die (F) output on the very first centimeters (from 2 to 5) with a very low incidence angle (U) (f.i. not above 45°) to allow the bubble to self-sustain. According to the invention,the complex ring AR comprised an inner cooling ring (ARI) stationary and provided with a lip (LA)and a slightly inclined profile LP, having maximum height of 15 mm and an outer ring (ARE) having an adjustable height to control the flow and the cooling air direction 10 fed from the outside through a ventilator .

Indeed by varying the distance between the two partial rings (ARI and ARE) the section 5 of channel C wherein the air 10 is adducted, and the incidence angle U of this air on the bubble are adjusted and optimized.

On the contrary if the inner ring ARI did not have a lowered profile LP and if the die lip (LA) height were higher than 2cm, the film on the very first portion (still half-molten) of the bubble would have fouled against the ring causing the bubble break. Critical have been found also the temperatures and the flow Q of the cooling air. A ventilator with a maximal capacity Qmax of at least 2000 $m^3$/h provided with a flow regulator has been used, which resulted adapted to adjust the air speed at values able to cool and sustain the bubble BO without impair its stability.

In fact if cooling air was not adduced in the output zone of the molten film from the die, the bubble would have not be able to self-sustain and would have collapsed on the die and break itself. In an advantageous and therefore preferred embodiment of the invention: a) the cooling air (10) speed at the output of the die cooling rings (ARI, ARE) was of about 8m/sec.; b) the air temperature was of or below 25°C, preferably of about 20°C and the extrusion temperature was not above 180°C. Indeed it was found that if the air flow were below 2000$m^3$/h and its temperature were not of or below 20-25°C, there would have been an insufficient cooling, a too slow crystallization and a film sticking. Moreover if the extrusion temperature were above 180°C, there would have been: - a very poor molten polymer consistency with conseguent impossibility to sustain the bubble; and a polymer thermal degradation with consequent presence of coal particles and bubble break. In the prefered embodiment of figures 1 and 2 the castle C had an adjustable height HC of from 4 to 6 meters, which was critically established to 4, 5 meters in fig. 1 and to 5m in fig. 2 as it is dependent on the film and screw speeds in such a way to let crystallize the film up to a degree to avoid sticking f.i. with the nips. If the castle height were not adjustable, as to low castle height correspond low thicknesses of the film, the crystallization time would be unsufficient and a sticking of the film to the nips would occur whereas if the castle height were too high, the film would have high thicknesses and the bubble would have a dangerous instability.

## Cast extrusion

Also here the extrusion temperature has to be not above 180°C preferably 170°C, otherwise a polymer thermal degradation would occur with the consequent presence of coal or carbonized particles which cause film irregularities. On the other hand, if the extrusion temperature were much lower than those of example 3, the complete melting of the film and thus the possibility of the film formation would not occurr. Critical have been also found the temperature and the film permanence on the cooling or chill nip (Chr): if the temperature were not kept to about 65°C and/or the stay time were below 10 seconds sticking and breaking of the film would have occurred. The unstretched cast or blown films obtained with the above process have been found extremely interesting for all the packagings of materials having a bio-degradation compatible with that of the films.

As an example, for the packaging of compostable materials, such as the organic origin wastes (from slaughterhouses, markets of vegetables and fruits, family wastes etc.) bags have been manufactured which do not request the separation from their content when the compost is being formed and utilized. In other words, whereas the conventional synthetic packagings must be separated from the compostable material because otherwise would create obstacles to the compost formation and spoil and pollute the compost left therein, the bags, sacks etc. made with the films according to the invention show the enormous advantages to be able to undergo the same transformation process of their content, without polluting it but, on the contrary, increasing its quantity. An other surprisingly advantageous application of the packagings formed with the films of the invention has been obtained in combination with vegetable propagation materials (f.i. seeds, bulbs, tubers etc.) which can now be seeded, transplanted etc. togheter with the packings utilized for their protection, transportation, stocking etc.

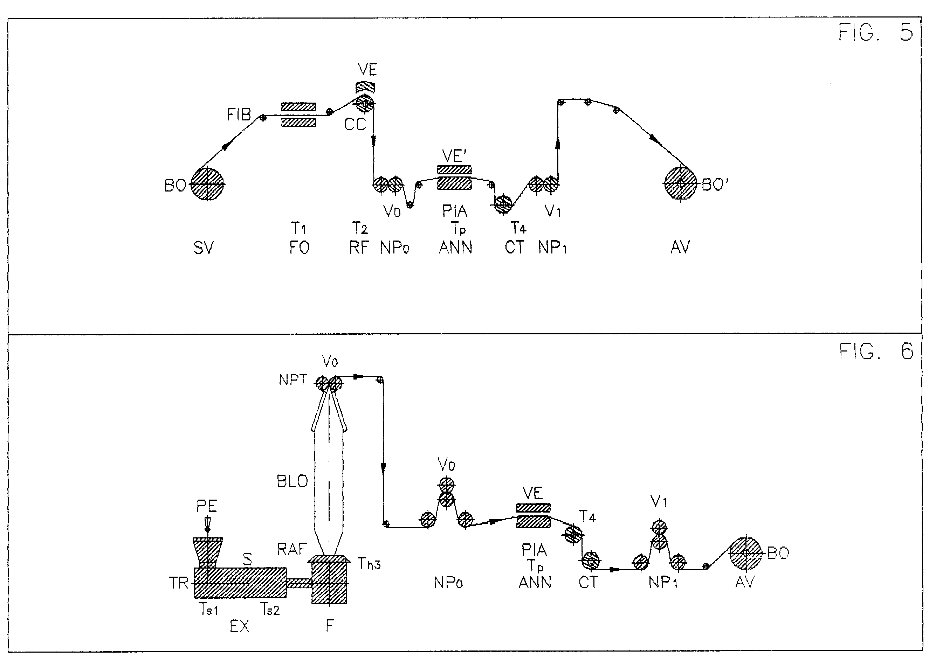

### Example 4 (Fig.5) Mono-axial stretching (out-line) of cast or blown films.

The bio-decomposable film FIB from the reel BO (f.i. of the apparatus of fig. 1 and/or 3) is unwound in SV, is submitted to a heating, f.e., in an oven FO at a temperature T1 of 130°C (T1 is generally in the range of 90-140°C), undergoes a cooling RF at a temperature T2 of 65°C (T2 is generally in the range of 30-80°C) and enters a stretching device comprising the first nip NPo rotating at Vo and the second nip NP1 turning at a speed $V1 = 3 - 5\ Vo$ .

Typically between said two nips a thermal treatment of an annealing type ANN at a temperature T3 of 75°C (generally T3 is in the range of 60-90°C) is carried out by contact with a heated plate PIA at the output of which is placed at least an idle thermostated cylinder CT with water circulation at temperature T4 of ca. 60°C (generally T4 is between 40° and 80°C).

After the second nip NP1 the film is re-wound in AV on a reel BO'. Oven FO is preferably heated by infrared rays or by hot water and takes film FIB at temperature T1 adapted to destroy at least partially the crystalline structure present on BO and generated in the period from the original extrusion and the present stretching. T1 is critically chosen to impart to the crystals at least partially the most suitable form and size to allow a permanent orientation of the macromolecular bodies. The cooling group RF consists of a hollow cylinder CC with water circulation, preferably assisted by a supplementary ventilator VE. The plate PIA of phase ANN is formed of a metall with low friction but high thermal trasmission coefficients, f.i. special steel and is accompanied by a supplementary fan VE' of hot air at temperature Tp.

Characteristically a system formed of PA, VE' and CT, unduces an annealing during stretching. Conventionally the second nip NP1 consists of a driven roller and a pressing roller. On three samples taken from the film collected on reel BO' were measured the properties (substantially similar to those of the next exemple) of Tables I and Ia from which it can be seen that not only the characteristics in the longitudinal direction are improved but also, and surprisingly, those in the transversal direction.

Table I

| Samples | Ultimate tensile strenght (N/mm$^2$) | Elongation at break (%) | Specific Young's Modulus (N/mm$^2$) | Load at 10% elongation (N/mm$^2$) |
|---|---|---|---|---|
| 1 | 90,300 | 87,359 | 336,885 | 22,219 |
| 2 | 88,359 | 91,331 | 344,912 | 21,925 |
| 3 | 81,492 | 82,013 | 231,425 | 19,533 |
| Average | 86,717 | 86,901 | 304,407 | 21,226 |
| D.S. | 4,628 | 4,676 | 63,331 | 1,473 |
| C.V. | 0,037 | 5,381 | 0,143 | 0,048 |

Table Ia

|  | Ultimate tensile strenght (N/mm²) | Elongation at break (%) | Specific Young's Modulus (N/mm²) | Load at 10% elongation (N/mm²) |
|---|---|---|---|---|
| 1 | 15,042 | 90,028 | 456,134 | 16,296 |
| 2 | 14,632 | 238,026 | 359,850 | 14,582 |
| 3 | 13,264 | 80,679 | 489,482 | 14,877 |
| Average | 14,313 | 136,244 | 438,155 | 15,252 |
| D.S. | 0,031 | 88,269 | 68,899 | 0,916 |
| C.V. | 0,045 | 64,788 | 0,108 | 0,041 |

**Example 5** (Fig.6: stretching in horizontal line on hot blown films)

Similarly to example 4 a blend of PHBV containing 8% HV, and of 10% (by weight on the mix total weight) of plasticizer ESTAFLEX was extruded in a screw having L/D of 350/25 mm, at temperatures Ts1 of ca. 145°C (generally Ts1 is in the range of 135°-155°C) and Ts2 of ca. 165°C (Ts2 is generally in the range of 155°-175°C. The die head had a diameter of 25 mm and a die gap of 0,5 mm and was heated at a temperature Th of 170°C (generally Th is within 160°-180°C). After cooling the molten mass, a bubble BLO was formed having diameter of 7 cm and height (distance between die F and nip NP.T) of 60 cm. The film collected on NP.T at a speed Vo of 2m/mm was passed to the nip NPo (turning also at Vo) of the stretching section after a path of 130 cm. The stretching section comprised a first length of preferably 150 cm at the end of which there is a heating system PIA at temperature Tp of 80°C (range of 60°-90°C), and a second length of 180 cm ending on the second nip NP1 turning at a speed V1 higher than Vo, in particular of 5m/min producing thus a stretch of 1:2.5.

The film so mono-stretched and oriented in the machine direction DM was wound in AV and three samples thereof showed the characteristics of Table II, confirming that they are improved in both directions.

Table II

| Mechanical characteristics | | | |
|---|---|---|---|
| Ultimate tensile strength | MD | N/mm² | 131,751 |
|  | TD | N/mm² | 16,490 |
| Elongation at break | MD | % | 50,709 |
|  | TD | % | 20,010 |
| Elastic modulus | MD | N/mm² | 506,100 |
|  | TD | N/mm² | 341,868 |
| Yeld point | MD | N/mm² | 131,751 |
|  | TD | N/mm² | 17,406 |

The operative conditions of the stretching system and the structure of NPo, VE, CT etc. are similar to those of example 4. In the scheme of fig. 6 the high temperature oven FO is not strictly necessary because the crystalline definitive form of the blown film at the input of ANN-PIA-VE has not had the time to be implemented.

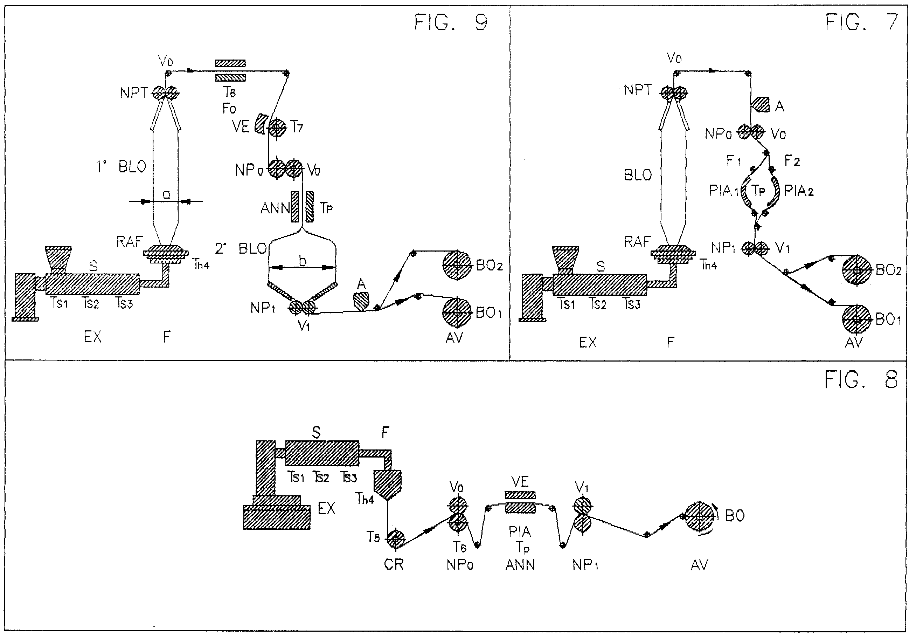

**Example 6** (Fig. 7) Hot-blown extrusion with vertical mono-axial stretching

The mono-screw extruder (similar to the extruder of figures 1 and 2) was heated with the aid of electric resistances in three zones having temperatures Ts1 = 140°C, Ts2 = 160°C and Ts3 = 160°C. The die F with circular output was heated at 165°C (range of 150°-180°C).

Said die had a cooling ring AR as in examples 1-2, which is critical to obtain a stable bubble BLO (and thus acceptable film) with good characteristics as in said examples. The nip NIP.T to close and flatten the bubble and to draft the film was turning at a Vo of 3-10 m/min, the bubble thickness being comprised between 50 and 200$\mu$.

"A" indicates a conventional device to cut and breakthrough the ends of the flattened bubble, so to obtain two separate films. Nip $NP_0$ acts as a fixed point for the stretching operation and turns at the same speed Vo of NP.T. Characteristically the two films (cut by "A") F1 and F2 were thermally treated in two separated plates PIA1 and PIA2 heated at a temperature Tp of 80°C (the range of Tp is 60-90°C) with the aid of diathermic oil or electrical resistances. $NP_1$ accomplished the stretching of the two films F1 and F2 which had the same characteristics of the above tables.

**Example 7** (fig. 8) On-line stretching of cast films.

A mono-screw extruder was heated by electrical resistances in three zones so to reach the following temperature propile:

| Ts1 = | within 135°-155°C (preferably 145°C) |
|---|---|
| Ts2 = | within 150°-170°C (preferably 157°C) |
| Ts3 = | within 155°-175°C (preferably 165°C) |

The extruder screw had diameter of 45 mm, length L of 1125 mm and thus a ratio L/D = 25:1.

The flat head die F had a melt output slit of 500 mm and an adjustable opening at 165°-185°C preferably 175°C. The chill roll CR was at a temperature T5 of 75°C (within the range 50°-100°C). Nip NPo acts as fixed point for the first film draft at a speed within 2-10 m/min. This group is kept at a temperature T6 of 90°C (within 40°-100°C) to slow down the crystalization velocity and control the crystal form and size. As an alternative, an air cooling (not shown in fig.8) can be provided directly thereafter. The heating group consists of plate PIA on which the film slides at temperature Tp of 75°C (within the range 60-90°C) and of an additional ventilator VE of warm air at 75°C -in the range 50°-100°C°. The second stretching nip NP1 turning at V1 varying from 3 to 5 times Vo, induces a permanent orientation of the macromolecules with consequent remarkable improvement of the physical properties of the "Biopol" film.

**Example 8** (Fig.9) Biaxial in-line stretching of a hot-blown film.

The extrusion was carried out as in examples 5 and fig. 6 with the same die and first bubble (1° BLO). The drafting nip NPT was also as in fig. 6 with however the difference that Vo was lower as the film thickness must be comprised between 100 and 300$\mu$.

The supplementary oven FO (as in fig. 4) is here at a temperature of 90°C (range of 80°-120°C) since the crystallization can already be in an advanced state because of the line low speed and of the film higher thickness. The cooling group RF (as in fig. 8) works when oven FO is used.

The nip NP1 was that of fig.8. An additional ventilation system PIA-VE can be used as in the prior example, however a heating group (working with warm air or IR rays) can alternatively be used to take the film temperature at 80°C (within the range 60°-100°C). Fig. 9 shows an oven of facing plates PIA1-PIA2 which do not contact the film still tubular and squashed whereby its two outer faces cannot be contemporaneously and uniformily heated by only one plate.

The second bubble 2° BLO was inflated so to have a diameter from 2 to 5 times the diameter of 1° BLO in order to produce also a film transversal stretching. The longitudinal stretching nip NP1 was that of the precedent figures. The sum of the two stretchings results in a biorientation.

**Claims**

1. A process for the production of totally biodecomposable films comprising: - the preparation of a film grade blend based on poly-beta-hydroxy butyrate (PHB) and poly-beta-hydroxy valerate (PHV); - the extrusion of this mixture; _ the cooling of the extruded sheet; - the possible stretching in at least one direction and/or the orientation of the film, and a possible stabilization of the oriented film, characterized in that: the mixture contains at least 75% of a biodecomposable co-polymer of poly-beta-hydroxy-butyrate, poly-beta-hydroxy valerate (PHBV), from 0 to 20% of plasticizer, from 0,3 to 1,5% of a nucleant and from 0 to 9,7% (by weight on the mixture weight) of other additives; - the poly-beta- hydroxy valerate (PHV) in the copolymer (PHBV) is from 4 to 16% by weight on the weight of said copolymer; the temperatures of the input and output of the extrusion are respectively from 110° to 150°C and from 140° to 180°C, said temperatures depending from the copolymer content in (PHV) and from the plasticizer and nucleant concentration.; - a cooling to 50°-75°C is carried out on the extruded film to establish the optimal condition of maximal crystallization speed in a minimum time period of at least seven seconds; - and the so extruded and crystallized film is stretched to a minimum thickness of 15 microns.

2. Process according to claim 1, in which the film is extruded in form of a bubble and is blown with air, characterized in that the polimeric mixture previously pelletized is extruded on a preformed bubble of EVA-resin or LDPE with melt index below 2,5 g/10 min; the temperature of the air cooling the blown film is of about 20°-25°C and the time period between the film output from the die and the end of the blowing phase is of about 10 seconds; and the bubble height i.e. the distance between the die output and the first drawing rollers is adjustable in the range of from 4 to 6 meters.

3. Process according to claims 1 and 2, characterized in that the cooling air is impacted on a short zone of 2-5 centimeters with a low incidence angle below 45°C on the film molten polymer at the die output, the air flow being of at least 2000 m$^3$/h.

4. Process according to claim 3, characterized in that the cooling air is adducted on the film through a cooling complex ring having a stationary inner ring with lowered horizontal profile and a short vertical lip, and an outer adjustable ring with an end facing said lip to create a controllable air opening.

5. Process according to claim 1, characterized in that the cast film is cooled on a chill roll at about 65°C for a stay time of at least 10 seconds.

6. Unstretched hot-blown and cast films as obtained from the process according to the above claims.

7. Packagings formed with the films of claim 6, particularly suitable for compostable and vegetable propagation materials.

8. Process to stretch the films of claim 6, characterized in that the extruded films are submitted to stretching with stretching ratios of from 1:2 to 1:6 at a temperature of 60°-150°C preferably by sliding in contact with a heated steel plate.

9. Process according to claim 8, in which the film is pre-extruded and wound on a reel, characterized in that the film unwinding from the reel is submitted to a pre-heating of from 90° to 140°C.

10. Mono-or bi-axiallly stretched films as obtained from the process of claim 9, characterized by ultimate tensile strength of from 15 to 70 Newton/mm$^2$ in the longitudinal direction and possibly of at least 15 Newton/mm$^2$ in the trasversal direction; and of elongation at break of from 50 to 350%.

FIGURA 1

FIGURA 2

FIGURA 3

FIGURA 4

EP 0 736 563 A1

FIG. 5

FIG. 6

FIG. 9

FIG. 8

FIG. 7

European Patent
Office

**EUROPEAN SEARCH REPORT**

Application Number

EP 95 10 5261

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 104 731 (ICI PLC) 4 April 1984<br>* page 4, line 11 - page 6, line 4 *<br>--- | 1,6,8 | C08J5/18<br>B29C47/88 |
| Y | WO-A-94 16000 (ZENECA LTD ;WADDINGTON SIMON DOMINIC (GB)) 21 July 1994<br>* the whole document *<br>--- | 1,6,8 | |
| X<br>A | EP-A-0 078 609 (ICI PLC) 11 May 1983<br>* page 7, line 11 - page 8, line 9; figure 4; example 4 *<br>--- | 10<br>1,8 | |
| X | DATABASE WPI<br>Section Ch, Week 9441<br>Derwent Publications Ltd., London, GB;<br>Class A23, AN 94-330140<br>& JP-A-06 256 480 ( TOYOBO KK) , 13 September 1994<br>* abstract *<br>--- | 7 | |
| A | EP-A-0 226 439 (GRACE W R & CO) 24 June 1987<br>* page 3, line 59 - page 4, line 60; claims *<br>* page 5, line 42 - line 45 *<br>--- | 1,2 | TECHNICAL FIELDS SEARCHED (Int.Cl.6)<br><br>C08J<br>B29C |
| A | DATABASE WPI<br>Section Ch, Week 8621<br>Derwent Publications Ltd., London, GB;<br>Class A32, AN 86-133749<br>& JP-A-61 069 431 ( TEIJIN KK) , 10 April 1986<br>* abstract *<br>--- | 8 | |
| E | WO-A-95 17454 (ZENECA LTD ;WADDINGTON SIMON DOMINIC (US)) 29 June 1995<br>* page 6, line 22 - line 28; claims *<br>* page 9, line 8 - page 11, line 15 *<br>----- | 1,6 | |

The present search report has been drawn up for all claims

| Place of search | Date of completion of the search | Examiner |
|---|---|---|
| THE HAGUE | 5 September 1995 | Pamies Olle, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)